# EUROPÄISCHE PATENTSCHRIFT

(11) **EP 1 181 609 B1**
(45) Veröffentlichungstag und Bekanntmachung des Hinweises auf die Patenterteilung: **16.07.2003**
(21) Anmeldenummer: 00929015.6
(22) Anmeldetag: 11.05.2000
(51) Int. Cl.: G02B 7/182, H01S 3/086, H01S 3/098

(54) **FOKUSSIEREINRICHTUNG**
FOCUSING DEVICE
DISPOSITIF DE CONCENTRATION

(30) Priorität: 18.05.1999 AT 88599
(43) Veröffentlichungstag der Anmeldung: 27.02.2002
(73) Patentinhaber: Femtolasers Produktions GmbH, 2100 Korneuburg (AT)
(72) Erfinder: STINGL, Andreas, A-2100 Korneuburg (AT)
(74) Vertreter: Weinzinger, Arnulf, Dipl.-Ing.
(86) Internationale Anmeldenummer: AT0000131
(87) Internationale Veröffentlichungsnummer: WO00070383

(56) Entgegenhaltungen:
- DE-A- 3 814 829
- US-A- 4 674 097
- US-A- 4 922 501

## Beschreibung

Die Erfindung betrifft eine Fokussiereinrichtung, insbesondere für Laservorrichtungen, gemäß dem einleitenden Teil von Anspruch 1 bzw. eine Laservorrichtung mit einer solchen Fokussiereinrichtung.

Fokussiereinrichtungen werden vielfach bei Laservorrichtungen verwendet, wobei für eine exakte Fokuseinstellung eine genaue Justierung des jeweiligen Fokussierspiegels erforderlich ist. Bei herkömmlichen Fokussiereinrichtungen werden als Träger für den Fokussierspiegel Verschiebetische (Translations- oder Messtische) mit Gleit- bzw. Wälzlagern eingesetzt; der Aufwand für diese Konstruktionen ist jedoch außerordentlich hoch, und ein immer vorhandenes Lagerspiel führt zu einer verminderten Steifigkeit des Elements.

Aufgabe der Erfindung ist daher die Schaffung einer Fokussiereinrichtung der eingangs angeführten Art, die sich durch einen einfachen und stabilen Aufbau auszeichnet, und die einer einfachen Herstellung zugänglich ist.

Zur Lösung dieser Aufgabe sieht die Erfindung eine Fokussiereinrichtung wie in Anspruch 1 definiert vor. Vorteilhafte Ausgestaltungen und Weiterbildungen sind in den abhängigen Ansprüchen angegeben. Weiters sieht die Erfindung eine Laservorrichtung mit einer erfindungsgemäßen Fokussiereinrichtung vor, wobei vorteilhafte Ausgestaltungen hievon Gegenstand der Ansprüche 14 und 15 sind.

Bei der vorliegenden Fokussiereinrichtung ist eine Z-förmige Schwinge vorgesehen, die so dimensioniert und angeordnet ist, dass - in Draufsicht gesehen - der Mittelpunkt des schwingenden Längsarmes mit dem Mittelpunkt des Kreises zusammenfällt, den die sphärische Spiegelfläche des Fokussierspiegels beschreibt. Bei einer translatorischen Verstellung der Z-förmigen Schwinge wird diese auch um die durch ihren geometrischen Mittelpunkt verlaufende Achse verdreht, was zu einer entsprechenden Verdrehung des Fokussierspiegels führt. Diese Verdrehung des Fokussierspiegels erfolgt jedoch um dessen Krümmungsmittelpunkt, d.h. der Fokussierspiegel wird "entlang seiner Spiegelfläche verdreht", so dass diese Verdrehung zu keiner Ablenkung des fokussierten Strahles führt. Der fokussierte Strahl verläuft daher weiterhin gemäß einer vorgegebenen Geraden, wobei nur der Fokuspunkt entlang dieser Geraden verstellt wird. Hierbei ist auch bevorzugt vorgesehen, dass der Krümmungsmittelpunkt der Spiegelfläche des Fokussierspiegels auf der Winkelhalbierenden zwischen dem einfallenden Strahl und der Linie liegt, entlang der der Fokus des Fokussierspiegels bei der Verstellung verschoben wird.

Die erfindungsgemäße Fokussiereinrichtung kann mit Vorteil bei Laservorrichtungen, insbesondere bei Laserresonatoren, eingesetzt werden, wie etwa bei Laservorrichtungen der Art, wie in der WO 98/10494 A beschrieben. Insbesondere kann die Erfindung auch bei Astigmatismus-kompensierten Laserresonatoren, etwa wie in Herwig W. Kogelnik, Erich P. Ippen, Andrew Dienes, Charles Shank: "Astigmatically Compensated Cavities for CW Dye Lasers", Journal of Quantum Electronics, QE-8, No.3, März 1972, S. 373-379, beschrieben, eingesetzt werden; bei einer derartigen Laserresonator-Anordnung ist das Lasermedium, nämlich ein Laserkristall, insbesondere ein Ti:S-(Titan-Saphir-)Laserkristall, in Form einer planparallelen Platte, im Brewster-Winkel zum Laserstrahl angeordnet, und der Laserstrahl wird in das Lasermedium mit Hilfe von Fokussierspiegeln fokussiert. Durch die Fokussierung in das im Brewster-Winkel angeordnete Lasermedium wird jedoch ein Astigmatismus eingeführt, und dieser wird durch ein Verkippen der Fokussierspiegel kompensiert.

Grundsätzlich ist jedoch die vorliegende Fokussiereinrichtung ganz allgemein bei beliebigen Anordnungen einsetzbar, wo ein Lichtstrahl bzw. Laserstrahl mit Hilfe eines Hohlspiegels fokussiert werden soll, und wo der Fokuspunkt genau einzujustieren ist.

Für die Ausbildung des Trägers und seine Lagerung wäre beispielsweise eine Bauweise mit einem Block (als Längsarm der Schwinge) und mit Flachstahlfedern (als "gelenkige" Querarme) denkbar. Auch sind Ausführungen denkbar, gemäß welchen starre Querarme gelenkig mit dem Längsarm verbunden sowie - mit ihren vom Längsarm abgewandten Enden - schwenkbar gelagert sind. Im Hinblick auf eine einfache Herstellung ist es vorteilhaft, wenn die vom Längsträger abgewandten Enden der Querarme der Z- förmigen Schwinge mit einem Basisträger über dünne Materialbereiche in der Art eines Filmscharnier-Gelenks verbunden sind. Der Basisträger ist dabei vorzugsweise plattenförmig ausgebildet.

In entsprechender Weise ist es günstig, wenn die Querarme der Z-förmigen Schwinge mit dem Längsarm über dünne Materialbereiche in der Art eines Filmscharnier-Gelenks verbunden sind.

Bei der vorliegenden Fokussiereinrichtung wird somit bevorzugt auf eine an sich bereits bekannte Technik von über elastisch deformierbare Lagerteile gelagerten Trägern zurückgegriffen, wie sie unter der Bezeichnung "Flexure Arrangement" in einem Katalog von Melles Griot, S. 368/369, beschrieben ist. Dabei werden bei den bekannten Anordnungen die Träger unter elastischer Verformung ihrer Lagerteile verstellt, wobei es aber zu einem für die vorliegenden Anwendungen unerwünschten Parallelversatz kommt. Um einen solchen Parallelversatz zu vermeiden, wurde auch ein - allerdings sehr komplizierter - Aufbau, "Compound Flexure Arrangement" genannt, vorgeschlagen. Im Vergleich zu dieser Anordnung mit flexibler Mehrfachlagerung ist die vorliegende Z-förmige Schwinge wesentlich einfacher in der Herstellung und überdies auch stabiler im Betrieb.

Im Hinblick auf eine anzustrebende Massenfertigung hat es sich ferner als günstig erwiesen, wenn die Z-förmige Schwinge aus dem plattenförmigen Basisträger durch Anbringung von Durchbrechungen, unter Belassung der dünnen Materialbereiche, herausgearbeitet ist. Bei der Herstellung kann von einer dickeren (z.B. ca. 20 mm dicken) Ausgangsplatte ausgegangen werden, in der die entsprechenden Nuten für die Durchbrechungen über einen Teil der Dicke der Platte (z.B. ca. 15 mm) eingearbeitet, z.B. eingefräst werden. Danach kann die restliche Dicke (z.B. ca. 5 mm) weggeschliffen werden, so dass die den Basisträger samt der Z-förmigen Schwinge bildende Platte, etwa mit einer Dicke von 15 mm, verbleibt. Für das Einarbeiten der Nuten bzw. Durchbrechungen können selbstverständlich auch andere Fertigungsverfahren, wie z.B. Funkenerodieren oder Wasserstrahlschneiden, angewandt werden.

Die dünnen Materialbereiche oder -stege, die die Filmscharniere bilden, weisen bevorzugt eine Dicke von ca. 0,3 mm bis 0,5 mm, insbesondere ca. 0,4 mm, auf. Bei einer derartigen Dimensionierung wird die gewünschte elastische Beweglichkeit der Z-förmigen Schwinge sichergestellt, ohne dass es zu einem Bruch der dünnen Materialbereiche kommt. Überraschend hat sich nämlich gezeigt, dass dickere Materialstege leichter brechen als derartige dünne Materialbereiche mit einer Stärke in der Größenordnung von einigen Zehntelmillimetern.

Im Hinblick einerseits auf die erforderliche elastische Deformierbarkeit und andererseits die gewünschte Stabilität ist es auch vorteilhaft, wenn der plattenförmige Basisträger und die Z-förmige Schwinge aus Aluminium oder aus einer AlMg-Legierung bestehen.

Um für die Unterbringung von anderen Komponenten der Fokussiereinrichtung, wie insbesondere jene Komponente, auf die zu fokussieren ist, außerhalb der Z-förmigen Schwinge besser Platz zu schaffen, ist es auch günstig, wenn der Längsarm der Z-förmigen Schwinge einen in Draufsicht gekröpften Verlauf aufweist.

Wie bereits erwähnt wird die vorliegende Erfindung mit Vorteil bei Laservorrichtungen eingesetzt, und demgemäß ist eine besonders vorteilhafte Anwendung dadurch gegeben, dass im Fokus des Fokussierspiegels, außerhalb der Z-förmigen Schwinge, ein Lasermedium, z.B. ein Laserkristall, angeordnet ist. Die Z-förmige Schwinge kann dabei einen der Fokussierspiegel eines Laserresonators tragen.

Die Erfindung wird nachstehend anhand von in der Zeichnung dargestellten besonders bevorzugten Ausführungsbeispielen, auf die sie jedoch nicht beschränkt sein soll, noch weiter erläutert. Es zeigen:
Fig.1 ein Schema eines sogen. X-gefalteten Vier-Spiegel-Laserresonators;
Fig.2 ein vergleichbares Schema eines sogen. Z-gefalteten Vier-Spiegel-Laserresonators;
Fig.3 eine Draufsicht auf einen plattenförmigen Basisträger mit den Komponenten eines X-gefalteten Laserresonators gemäß Fig.1, wobei einer der Fokussierspiegel auf einer im Basisträger integrierten, darin beweglich gelagerten, in Draufsicht Z-förmigen Schwinge angebracht ist;
Fig.4 eine Draufsicht auf die Basisplatte gemäß Fig.3, mit u.a. der Z-förmigen Schwinge, jedoch ohne die Komponenten der Laservorrichtung; und
Fig.5 ein Schema der Z-förmigen Schwinge zur Veranschaulichung von deren Wirkungsweise bei einer Verstellung, wobei die verstellte Lage mit strichlierten Linien veranschaulicht ist.

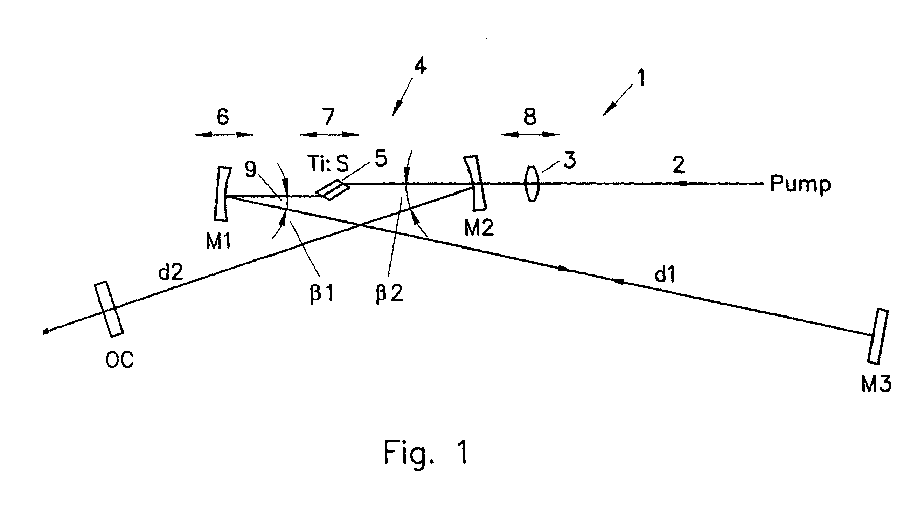

In Fig.1 ist schematisch eine Laservorrichtung 1 veranschaulicht, bei der ein Pumpstrahl 2 über eine Linse 3 einem X-gefalteten Laserresonator 4 zugeführt wird. Die Bezeichnung "X-gefaltet" rührt daher, dass zwei zu Endspiegeln M3 bzw. OC gerichtete Laserstrahlarme d1, d2 einander kreuzen und somit ein "X" bilden.

Der Laserresonator 4 ist ferner mit zwei Laserspiegeln M1, M2 ausgebildet, zwischen denen als Lasermedium ein Ti:S-(Titan-Saphir-)Kristall 5 angeordnet ist. Dabei handelt es sich um einen planparallelen Körper, ein Parallelepiped, welches beispielsweise optisch nicht-linear ist und ein Kerr-Element bildet. Dieser Laserkristall 5 ist im sogen. Brewster-Winkel angeordnet, um Verluste zu minimieren, und in diesen Laserkristall 5 wird der Laserstrahl fokussiert. Durch die Fokussierung in den im Brewster-Winkel angeordneten Laserkristall 5 wird ein Astigmatismus eingeführt, der jedoch durch ein Verkippen der Fokussierspiegel M1, M2 kompensiert werden kann, vgl. die Winkel β1 und β2 in Fig.1.

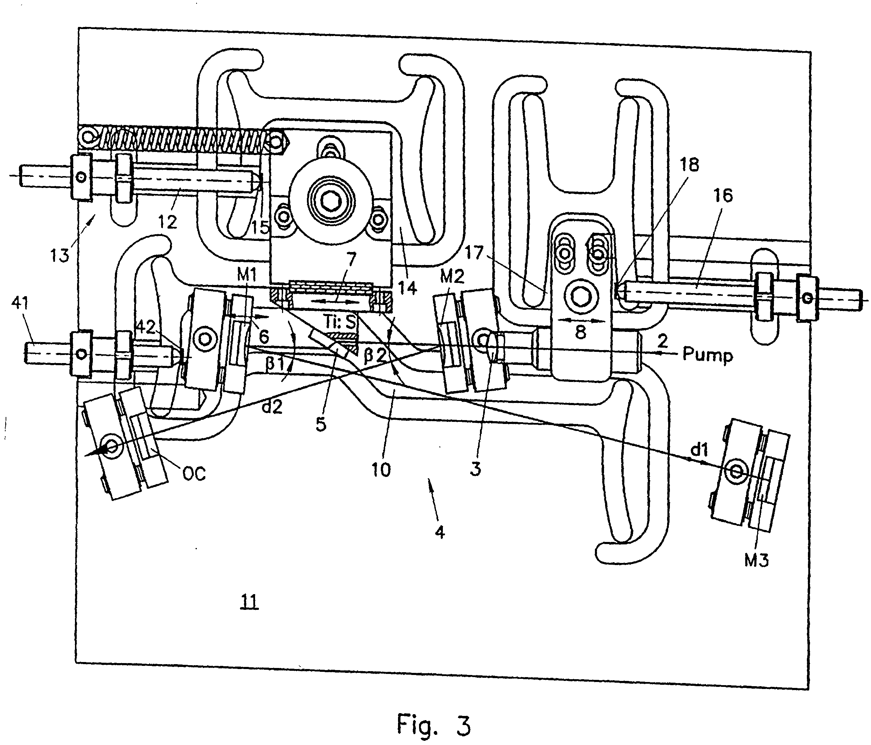

Von den beiden Fokussierspiegeln ist der eine Spiegel, M2, fest, hingegen wird der andere Spiegel, M1, zur Einstellung des Fokuspunktes im Laserkristall 5 genau justiert, was in Fig.1 mit dem Doppelpfeil bei 6 veranschaulicht ist. Im Übrigen können auch der Laserkristall 5 sowie die Linse 3 im Zuge der Montage linear verstellt werden, wie durch weitere Doppelpfeile 7, 8 in Fig.1 angedeutet ist; diese Verstellungen werden nachstehend anhand der Fig.3 bis 5 noch näher erläutert werden.

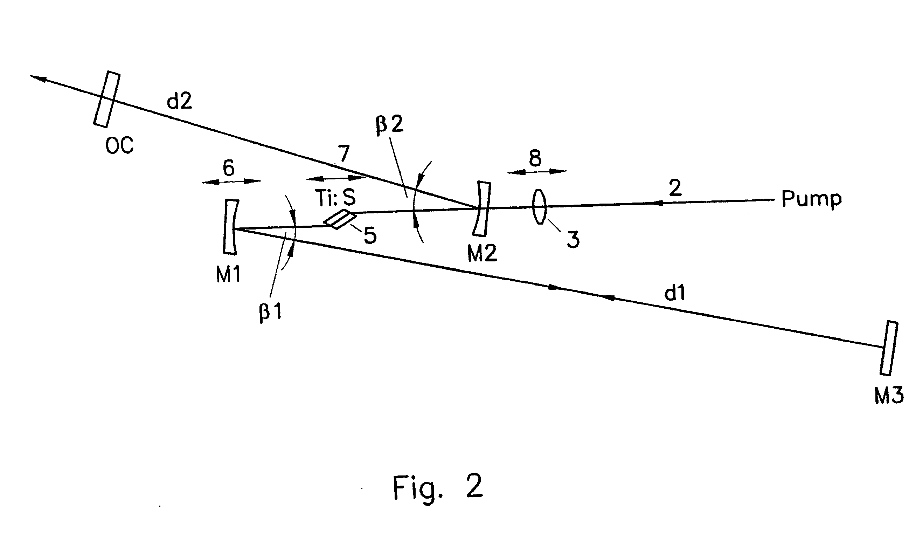

In Fig.2 ist in einem ähnlichen Schema ein Z-gefalteter Vier-Spiegel-Laserresonator gezeigt, bei dem ein Laserstrahl-Arm d2 nach oben und ein Laserstrahl-Arm d1 nach unten abgelenkt wird; diese beiden Arme d1, d2 bilden mit der Verbindung zwischen den Laserspiegeln M1, M2 ein "Z".

Im Übrigen entsprechen die Bauelemente der Laservorrichtung gemäß Fig.2 jenen gemäß Fig.1, wobei auch die gleichen Bezugszeichen verwendet wurden, und es kann sich somit eine weitere Erläuterung erübrigen.

Die anhand der Fig.1 und 2 erläuterten Laserresonatoren 4 sind nur als Beispiele für die Anwendung der vorstehenden Fokussiereinrichtung zu verstehen, und die vorliegende Fokussiereinrichtung kann auch beispielsweise bei Drei-Spiegel-Resonatoren oder aber bei Mehr-Spiegel-Resonatoren (mit mehr als vier Spiegeln) ebenso wie ganz allgemein bei der Verstellung von zur Fokussierung verwendeten sphärischen Hohlspiegeln eingesetzt werden.

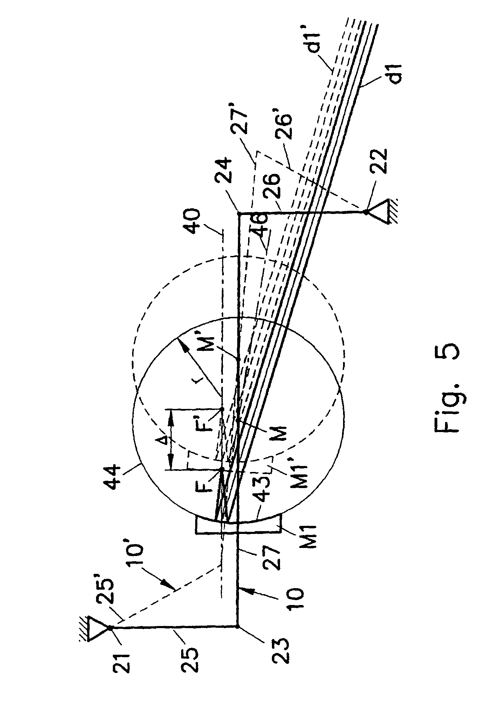

Um den Fokuspunkt des Fokussierspiegels M1 im Laserkristall 5 genau einjustieren zu können bzw. die Stabilitätsbereiche des Laserresonators 4 für eine stabile Lasertätigkeit zu finden, muss eine Verstellung des Fokussierspiegels M1 erreicht werden, bei der der Verlauf des Laserstrahls zwischen diesem Fokussierspiegel M1 und dem Laserkristall 5 örtlich nicht verschoben wird. Dieser Laserstrahl-Verlauf ist in Fig.1 und 2 bei 9 angegeben. Um diese Strahlausrichtung beizubehalten, wurden in der Vergangenheit aufwendige Verschiebetische als Träger für den Fokussierspiegel M1 verwendet. Anstattdessen wird nunmehr, wie aus den Fig.3 bis 5 ersichtlich, eine in Draufsicht im Wesentlichen Z-förmige Schwinge 10 eingesetzt, die in einer bestimmten, nachstehend näher erläuterten Weise angeordnet und dimensioniert ist, um trotz eines Verdrehens bei einer Verstellung in Längsrichtung die vorgegebene Ausrichtung des Strahls 9 beizubehalten und somit nur den Fokuspunkt F (s. Fig.5) durch Verstellung des Fokussierspiegels M1 zu verschieben.

Die Z-förmige Schwinge 10 ist aus einem plattenförmigen Basisträger 11 herausgearbeitet, der zur Montage der gesamten Laservorrichtung, beispielsweise gemäß Fig.1, dient. Demgemäß sind in Fig.3 die Linse 3, die beiden Laserspiegel M2 und M1, die beiden Endspiegel M3 und OC sowie der Laserkristall 5 auf dem Basisträger 11 montiert gezeigt. Dabei ist der vorstehend anhand der Fig.1 erläuterte X-gefaltete Vier-Spiegel-Laserresonator 4 gebildet.

Zur Verstellung des Halters mit dem Laserkristall 5 gemäß Doppelpfeil 7 ist eine Stellspindel 12 vorgesehen, die sich in einem festen Lager 13 auf der Basisplatte 11 abstützt und an einem in ähnlicher Weise wie die Z-förmige Schwinge 10 aus dem Basisträger 11 herausgearbeiteten, parallel verstellbaren, in Draufsicht allgemein U-förmigen Tragelement 14 angreift, wie in Fig.3 bei 15 schematisch veranschaulicht ist. In ähnlicher Weise greift eine Stellspindel 16 an einem Tragelement 17 für die Linse 3 bei 18 an, um so eine Parallelverschiebung gemäß Doppelpfeil 8 zu ermöglichen.

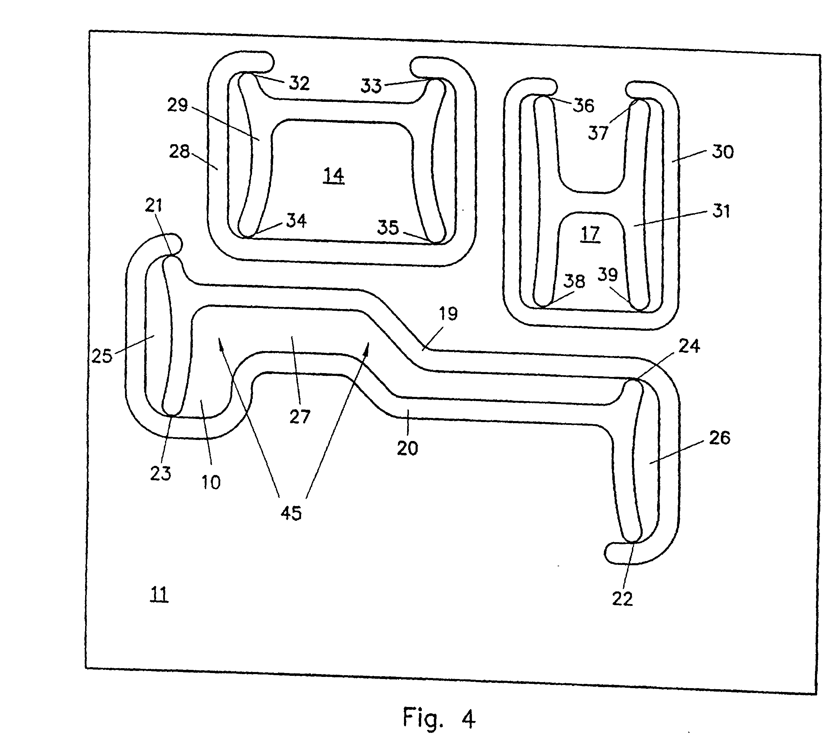

Die beiden Tragelemente 14, 17 ergeben sich hinsichtlich ihrer Ausbildung und Anordnung ebenso wie die Z-förmige Schwinge 10 deutlicher aus der Draufsicht gemäß Fig.4.

Im plattenförmigen Basisträger 11 sind, um die Z-förmige Schwinge 10 zu erhalten, zwei in ihrem Verlauf aus Fig.4 ersichtliche schlitzförmige Durchbrechungen 19, 20 angebracht, wobei zwischen diesen Durchbrechungen 19, 20 dünne Materialbereiche oder -stege 21, 22 bzw. 23, 24 belassen sind, um dadurch Filmscharnier-Gelenke mit Gelenkachsen senkrecht zu der Zeichenebene zu bilden. Die einen Materialbereiche 21, 22 verbinden die beiden äußeren Querarme 25, 26 der Z-förmigen Schwinge 10 mit dem übrigen plattenförmigen Basisträger 11, wogegen die anderen Materialbereiche 23, 24 jeweils einen der Querarme 25, 26 mit dem mittigen, schwingenden Längsarm 27 der Z-förmigen Schwinge 10 verbinden.

In ähnlicher Weise sind auch die Tragelemente 14, 17 durch schlitzförmige Durchbrechungen 28, 29 bzw. 30, 31 definiert, wobei in vergleichbarer Weise dünne Materialstege bei 32, 33; 34, 35 bzw. 36, 37; 38, 39 zur Bildung von Filmscharnier-Gelenken belassen sind. Dadurch können diese Tragelemente 14, 17 in Richtung der Doppelpfeile 7 bzw. 8 in Fig.1 bis 3 mit Hilfe der Spindeln 12 bzw. 16 verstellt werden, wobei es allerdings auch zu einem geringfügigen Versatz quer dazu kommt, der aber bei der vorliegenden Anwendung nicht weiter störend ist.

Von Bedeutung ist jedoch, dass mit Hilfe der Z-förmigen Schwinge 10 der Fokussierspiegel M1 derart verstellt werden kann, dass sein Fokuspunkt F bzw. F' bei einer Verstellung, etwa um die Größe Δ, vgl. Fig.5, auf ein und derselben Linie 40 verstellt wird, die in Fig.5 strichpunktiert eingezeichnet ist. In Fig.5 ist dabei mit vollen Linien die Ausgangslage der nur schematisch mit Geraden angedeuteten Z-förmigen Schwinge 10 und mit strichlierten Linien bei 10' die dazu verstellte Lage veranschaulicht.

Zur Verstellung ist in entsprechender Weise eine Verstellspindel 41 an der Basisplatte 11 gelagert, die bei 42 an einem Halter für den Fokussierspiegel M1 angreift, s. Fig.3.

In Fig.5 ist für den Fokussierspiegel M1, der eine sphärische Spiegelfläche 43 hat, auch der zugehörige Krümmungskreis 44 veranschaulicht, und dabei ist ersichtlich, dass in der Draufsicht gemäß Fig.5 der Krümmungsmittelpunkt M der sphärischen Spiegelfläche 43 des Fokussierspiegels M1, d.h. der Mittelpunkt des Kreises 44, mit dem Mittelpunkt (= Drehpunkt) des Längsarmes 27 der Z-förmigen Schwinge 10 (oder genauer mit der senkrecht zur Zeichenebene von Fig.5 durch diesen Mittelpunkt verlaufenden Achse) zusammenfällt; der Mittelpunkt M des Kreises 44 soll dabei auch auf der Winkelhalbierenden 46 zwischen dem einfallenden Strahl d1 und der Linie 40, entlang der sich der Fokus F verschiebt, liegen.

Das Zusammenfallen der Mittelpunkte M ist von Bedeutung, da dadurch erreicht wird, dass bei einem Verstellen der Z-förmigen Schwinge 10, wobei deren Längsarm 27 in der Darstellung in Fig.5 beispielsweise nach rechts verschoben sowie gleichzeitig um seine sich verschiebende Mittelachse M verschwenkt wird der Fokussierspiegel M1 bei der Längsverschiebung und Verdrehung mitgenommen wird; da der Fokussierspiegel M1 aber um den längsverschobenen Mittelpunkt M verdreht wird, hat dies keine nachteiligen Auswirkungen auf den zu fokussierenden Laserstrahl, vgl. d1 bzw. 9, da aufgrund der sphärischen Ausbildung der Spiegelfläche 43 der Fokuspunkt F bzw. F' auf der genannten Linie 40 bleibt, die dem Laserstrahl-Verlauf 9 in Fig.1 und 2 entspricht. In diesem Fokuspunkt F bzw. F' ist der Bauteil angebracht, auf den zu fokussieren ist, im vorliegenden Beispiel also der Laserkristall 5, wobei ersichtlich ist, das der Fokuspunkt F bzw. F' entsprechend der Verschiebung Δ exakt auf den vorgegebenen Ort des Laserkristalls 5 einjustiert bzw. der Abstand zwischen den Laserspiegeln M1, M2 verändert werden kann, um die Stabilitätsbereiche des Lasers einzustellen.

Der Laserstrahl-Arm d1 wird bei dieser Justierung, wie aus Fig.5 ersichtlich ist, etwas parallel zu seinem Längsverlauf versetzt, s. d1' in Fig.5, jedoch spielt dieser Parallelversatz keine Rolle, da der zugehörige Endspiegel M3 ein ebener Spiegel ist, der nur genügend groß sein muss, um trotz dieses Parallelversatzes des Laserstrahls den Laserstrahl d1 in sich zurückreflektieren zu können.

Mit der insbesondere aus Fig.3 ersichtlichen Bauweise der Laservorrichtung, unter Anordnung der verschiedenen Bauteile auf dem Basisträger 11 und des justierbaren Fokussierspiegels M1 auf der aus diesem Basisträger 11 herausgearbeiteten Z-förmigen Schwinge 10, wird eine außerordentlich kompakte, stabile, robuste Einrichtung erhalten, wobei sich die Träger-Ausbildung auch für eine Massenfertigung eignet. Der plattenförmige Basisträger 11 kann aus Aluminium oder einer Aluminium-Magnesium-Legierung bestehen, und er kann eine Dicke von ca. 15 mm aufweisen. Bei der Herstellung wird von einer entsprechenden Metallplatte mit einer Stärke von beispielsweise 20 mm ausgegangen, in der Nuten bis in eine Tiefe von ca. 15 mm, entsprechend den verschiedenen Durchbrechungen 19, 20 sowie 28, 29, 30, 31, eingearbeitet, insbesondere gefräst, werden. Danach wird die restliche Dicke der Platte, hier also von 5 mm, abgeschliffen, so dass der Basisträger 11 mit den über seine ganze Dicke hindurchgehenden Durchbrechungen verbleibt. Dadurch wird der Beweglichkeit der Tragelemente 14, 17 bzw. der Z-förmigen Schwinge 10 unter elastischer Verformung der verbleibenden dünnen Materialbereiche sichergestellt.

Selbstverständlich sind auch gewisse Abweichungen von den vorstehend erläuterten Anordnungen und Ausrichtungen zulässig, wie etwa eine geringfügige Abweichung des Krümmungsmittelpunktes M der Spiegelfläche 43 von der durch die Mitte des Längsarmes 27 der Z-förmigen Schwinge 10 verlaufenden Achse; auch können die beiden Querarme 25, 26 etwas voneinander verschiedene Längen haben. Der Längsarm 27 der Z-förmigen Schwinge 10 muss nicht geradlinig sein, wie im Schema gemäß Fig.5 dargestellt, sondern er kann auch in Draufsicht gekröpft sein, wie dies in Fig.4 bei 45 ersichtlich ist. Dadurch ist die Unterbringung des Laserkristalls 5 im Weg des fokussierten Laserstrahls 9 zwischen den Fokussierspiegeln M1 und M2 leichter möglich.

## Patentansprüche

1. Fokussiereinrichtung mit einem an einem in einer Ebene verstellbaren Träger angebrachten Fokussierspiegel (M1) mit einer sphärischen Spiegelfläche, **dadurch gekennzeichnet, dass** der verstellbare Träger durch eine in Draufsicht zumindest ungefähr Z-förmige Schwinge (10) gebildet ist, die einen an beiden Enden mit Querarmen (25, 26) gelenkig verbundenen schwingenden Längsarm (27) aufweist, der den Fokussierspiegel (M1) trägt, dass die Querarme (25, 26) um zur Verstell-Ebene senkrechte Gelenkachsen schwenkbar angeordnet sind, und dass der Krümmungsmittelpunkt (M) der sphärischen Spiegelfläche (43) des Fokussierspiegels (M1) zumindest im Wesentlichen auf einer durch den geometrischen Mittelpunkt des Längsarmes (27) verlaufenden Achse senkrecht zur Verstell-Ebene liegt.

2. Fokussiereinrichtung nach Anspruch 1, **dadurch gekennzeichnet, dass** der Krümmungsmittelpunkt (M) der Spiegelfläche (43) des Fokussierspiegels (M1) auf der Winkelhalbierenden (46) zwischen dem einfallenden Strahl (d1) und der Linie (40) liegt, entlang der der Fokus (F) des Fokussierspiegels (M1) bei der Verstellung verschoben wird.

3. Fokussiereinrichtung nach Anspruch 1 oder 2, **dadurch gekennzeichnet, dass** die Enden der Querarme (25, 26) der Z-förmigen Schwinge (10) mit einem Basisträger (11) über dünne Materialbereiche (21, 22) in der Art eines Filmscharnier-Gelenks verbunden sind.

4. Fokussiereinrichtung nach Anspruch 3, **dadurch gekennzeichnet, dass** der Basisträger (11) plattenförmig ausgebildet ist.

5. Fokussiereinrichtung nach einem der Ansprüche 1 bis 4, **dadurch gekennzeichnet, dass** die Querarme (25, 26) der Z-förmigen Schwinge (10) mit dem Längsarm (27) über dünne Materialbereiche (23, 24) in der Art eines Filmscharnier-Gelenks verbunden sind.

6. Fokussiereinrichtung nach Anspruch 4 und 5, **dadurch gekennzeichnet, dass** die Z-förmige Schwinge (10) aus dem plattenförmigen Basisträger (11) durch Anbringung von Durchbrechungen (19, 20), unter Belassung der dünnen Materialbereiche (21, 22, 23, 24), herausgearbeitet ist.

7. Fokussiereinrichtung nach einem der Ansprüche 4 bis 6, **dadurch gekennzeichnet, dass** der plattenförmige Basisträger (11) sowie die Z-förmige Schwinge (10) eine Dicke von ca. 15 mm aufweisen.

8. Fokussiereinrichtung nach einem der Ansprüche 3 bis 7, **dadurch gekennzeichnet, dass** die dünnen Materialbereiche (21, 22, 23, 24) eine Dicke von ca. 0,3 mm bis 0,5 mm aufweisen.

9. Fokussiereinrichtung nach einem der Ansprüche 3 bis 8, **dadurch gekennzeichnet, dass** die dünnen Materialbereiche (21, 22, 23, 24) eine Dicke von ca. 0,4 mm aufweisen.

10. Fokussiereinrichtung nach einem der Ansprüche 6 bis 9, **dadurch gekennzeichnet, dass** der plattenförmige Basisträger (11) und die Z-förmige Schwinge (10) aus Aluminium bestehen.

11. Fokussiereinrichtung nach einem der Ansprüche 6 bis 9, **dadurch gekennzeichnet, dass** der plattenförmige Basisträger (11) und die Z-förmige Schwinge (10) aus einer AlMg-Legierung bestehen.

12. Fokussiereinrichtung nach einem der Ansprüche 1 bis 11, **dadurch gekennzeichnet, dass** der Längsarm (27) der Z-förmigen Schwinge (10) einen in Draufsicht gekröpften Verlauf aufweist.

13. Laservorrichtung (1) mit einer Fokussiereinrichtung nach einem der Ansprüche 1 bis 12.

14. Laservorrichtung nach Anspruch 13, **dadurch gekennzeichnet, dass** im Fokus (F) des Fokussierspiegels (M1), außerhalb der Z-förmigen Schwinge (10), ein Lasermedium, z.B. ein Laserkristall (5), angeordnet ist.

15. Laservorrichtung nach Anspruch 13 oder 14, **dadurch gekennzeichnet, dass** die Z-förmige Schwinge (10) einen der Fokussierspiegel (M1) eines Laserresonators (4) trägt.

## Claims

1. A focussing arrangement comprising a focussing mirror (M1) arranged on a carrier which is displaceable in one plane, and having a spherical reflecting surface, **characterized in that** the displaceable carrier is formed by a rocking member (10) which is at least approximately Z-shaped when seen in top view, the rocking member having a rocking longitudinal arm (27) which is articulately connected on both ends to transverse arms (25, 26), the longitudinal arm carrying the focussing mirror (M1), **in that** the transverse arms (25, 26) are arranged so as to be pivotable about pivot axes perpendicular to the plane of displacement, and **in that** the center of curvature (M) of the spherical reflecting surface (43) of the focussing mirror (M1) lies at least substantially on an axis extending through the geometric center of the longitudinal arm (27) and perpendicular to the plane of displacement.

2. A focussing arrangement according to claim 1, **characterized in that** the center of curvature (M) of the reflecting surface (43) of the focussing mirror (M1) lies on the median (46) between the incident beam (d1) and the line (40) along which the focus (F) of the focussing mirror (M1) is shifted during the displacement.

3. A focussing arrangement according to claim 1 or 2, **characterized in that** the ends of the transverse arms (25, 26) of the Z-shaped rocking member (10) are connected to a base carrier (11) via thin material regions (21, 22) in the manner of an integral hinge.

4. A focussing arrangement according to claim 3, **characterized in that** the base carrier (11) has a plate-shaped configuration.

5. A focussing arrangement according to any one of claims 1 to 4, **characterized in that** the transverse arms (25, 26) of the Z-shaped rocking member (10) are connected to the longitudinal arm (27) via thin material regions (23, 24) in the manner of an integral hinge.

6. A focussing arrangement according to claim 4 and 5, **characterized in that** the Z-shaped rocking member (10) is machined from the plate-shaped base carrier (11) by providing openings (19, 20) while leaving the thin material regions (21, 22, 23, 24).

7. A focussing arrangement according to any one of claims 4 to 6, **characterized in that** the plate-shaped base carrier (11) as well as the Z-shaped rocking member (10) have a thickness of approximately 15 mm.

8. A focussing arrangement according to any one of claims 3 to 7, **characterized in that** the thin material regions (21, 22, 23, 24) have a thickness of from approximately 0.3 mm to 0.5 mm.

9. A focussing arrangement according to any one of claims 3 to 8, **characterized in that** the thin material regions (21, 22, 23, 24) have a thickness of approximately 0.4 mm.

10. A focussing arrangement according to any one of claims 6 to 9, **characterized in that** the plate-shaped base carrier (11) and the Z-shaped rocking member (10) are made of aluminum.

11. A focussing arrangement according to any one of claims 6 to 9, **characterized in that** the plate-shaped base carrier (11) and the Z-shaped rocking member (10) are made of an AlMg alloy.

12. A focussing arrangement according to any one of claims 1 to 11, **characterized in that** the longitudinal arm (27) of the Z-shaped rocking member (10) has a cranked shape, seen in top view.

13. A laser device (1) comprising a focussing arrangement according to any one of claims 1 to 12.

14. A laser device according to claim 13, **characterized in that** a laser medium, e.g. a laser crystal (5), is arranged in the focus (F) of the focussing mirror (M1), externally of the Z-shaped rocking member (10).

15. A laser device according to claim 13 or 14, **characterized in that** the Z-shaped rocking member (10) carries one of the focussing mirrors (M1) of a laser resonator (4).

## Revendications

1. Dispositif de focalisation comprenant un miroir de focalisation (M1) à face réfléchissante sphérique, qui est monté sur un support réglable dans un plan, **caractérisé en ce que** le support réglable est formé par une coulisse (10) au moins sensiblement en forme de Z par référence à une vue de dessus, qui comporte un bras longitudinal (27) oscillant, qui est assemblé de manière articulée au niveau de ses deux extrémités à des bras transversaux (25, 26) et qui porte le miroir de focalisation (M1), **en ce que** les bras transversaux (25, 26) sont agencés de manière pivotante autour d'axes d'articulation perpendiculaires au plan de réglage, et **en ce que** le centre de la courbure (M) de la face réfléchissante (43) sphérique du miroir de focalisation (M1) est situé au moins sensiblement perpendiculairement au plan de réglage sur un axe qui passe à travers le centre géométrique du bras longitudinal (27).

2. Dispositif de focalisation selon la revendication 1, **caractérisé en ce que** le centre de la courbure (M) de la face réfléchissante (43) du miroir de focalisation (M1) est situé sur la bissectrice (46) entre le rayon incident (d1) et la raie (40), est déplacé pendant le réglage le long du foyer (F) du miroir de focalisation (M1).

3. Dispositif de focalisation selon la revendication 1 ou 2, **caractérisé en ce que** les extrémités des bras transversaux (25, 26) de la coulisse (10) en forme de Z sont assemblées avec un support de base (11) par l'intermédiaire de minces zones de matière (21, 22) à la manière d'une articulation à feuille mince.

4. Dispositif de focalisation selon la revendication 3, **caractérisé en ce que** le support de base (11) est réalisé en forme de plaque.

5. Dispositif de focalisation selon l'une quelconque des revendications 1 à 4, **caractérisé en ce que** les bras transversaux (25, 26) de la coulisse (10) en forme de Z sont assemblés avec le bras longitudinal (27) par l'intermédiaire de minces zones de matière (23, 24) à la manière d'une articulation à feuille mince.

6. Dispositif de focalisation selon les revendications 4 et 5, **caractérisé en ce que** la coulisse (10) en forme de Z est usinée dans le support de base (11) en forme de plaque, par la réalisation d'ajours (19, 20) en laissant subsister les minces zones de matière (21, 22, 23, 24).

7. Dispositif de focalisation selon l'une quelconque des revendications 4 à 6, **caractérisé en ce que** le support de base (11) en forme de plaque, ainsi que la coulisse (10) en forme de Z ont une épaisseur de 15 mm environ.

8. Dispositif de focalisation selon l'une quelconque des revendications 3 à 7, **caractérisé en ce que** les minces zones de matière (21, 22, 23, 24) ont une épaisseur de 0,3 mm à 0,5 mm environ.

9. Dispositif de focalisation selon l'une quelconque des revendications 3 à 8, **caractérisé en ce que** les minces zones de matière (21, 22, 23, 24) ont une épaisseur de 0,4 mm environ.

10. Dispositif de focalisation selon l'une quelconque des revendications 6 à 9, **caractérisé en ce que** le support de base (11) en forme de plaque et la coulisse (10) en forme de Z sont réalisés en aluminium.

11. Dispositif de focalisation selon l'une quelconque des revendications 6 à 9, **caractérisé en ce que** le support de base (11) en forme de plaque et la coulisse (10) en forme de Z sont réalisés dans un alliage AlMg.

12. Dispositif de focalisation selon l'une quelconque des revendications 1 à 11, **caractérisé en ce que** le bras longitudinal (27) de la coulisse (10) en forme de Z suit un tracé coudé par référence à une vue de dessus.

13. Dispositif de laser (1) avec un dispositif de focalisation selon l'une quelconque des revendications 1 à 12.

14. Dispositif de laser selon la revendication 13, **caractérisé en ce que**, outre la coulisse (10) en forme de Z, un milieu actif laser, tel qu'un cristal pour laser (5), est agencé dans le foyer (F) du miroir de focalisation (M1).

15. Dispositif de laser selon la revendication 13 ou 14, **caractérisé en ce que** la coulisse (10) en forme de Z porte l'un des miroirs de focalisation (M1) d'un résonateur pour laser (4).
